# EUROPÄISCHE PATENTSCHRIFT

(11) **EP 3 146 231 B1**
(45) Veröffentlichungstag und Bekanntmachung des Hinweises auf die Patenterteilung: **18.07.2018**
(21) Anmeldenummer: 15721124.4
(22) Anmeldetag: 05.05.2015
(51) Int. Cl.: F16F 15/03

(54) **ROTATIONSDÄMPFER**
ROTATION DAMPER
AMORTISSEUR DE ROTATION

(30) Priorität: 23.05.2014 DE 102014007844
(43) Veröffentlichungstag der Anmeldung: 29.03.2017
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2015/000913
(87) Internationale Veröffentlichungsnummer: WO 2015/176797

(56) Entgegenhaltungen:
- EP-A1- 1 354 731
- DE-A1-102011 009 608
- DE-A1-102011 102 743

## Beschreibung

Die Erfindung betrifft einen Rotationsdämpfer.

Die DE 10 2009 048 818 A1 offenbart einen elektrischen Dämpfer zum Dämpfen der Relativbewegung zwischen einer ersten und einer zweiten Masse, umfassend einen durch die Massenbewegung angetriebenen Generator, wobei der Generator in ein Getriebe integriert ist, wobei ein einen Stator bildendes erstes Getriebeelement durch die Massebewegung in Drehung versetzt wird, worüber ein einen Rotor bildendes zweites Getriebeelement, das mit dem ersten Getriebeelement direkt oder indirekt übersetzt gekoppelt ist, gedreht wird, wobei entweder am ersten oder am zweiten Getriebeelement Mittel zur Erzeugung eines Magnetfelds vorgesehen sind.

Bei der DE 10 2009 048 818 A1 erfolgt die Drehmomentabstützung des Rotationsdämpfers über zwei feste Verschraubungspunkte zur Karosserie als eine der beiden Massen. Dabei müssen die beiden Verschraubungspunkte zur Abstützung des Drehmoments eine Mindest-Abstützbreite haben. Gleichzeitig soll die Lagerung des Rotationsdämpfers gegenüber der Karosserie elastisch erfolgen. Aufgrund der über die Hebelarme eingeleiteten Kräfte, die sich aus der Abstützbreite ergeben, kann die Steifigkeit und die Auslegung der elastischen Lagerung des Rotationsdämpfers an der Karosserie schwer eingestellt und abgestimmt werden.

Die DE 602 26 122 T2 betrifft eine Anordnung zur Dämpfungssteuerung in einer Fahrzeugaufhängung, wobei eine Aufhängungsanordnung für jedes Rad mindestens zwei Lenker aufweist, die ein Rad mit einem Fahrzeugfahrgestell verbinden, und wobei eine Torsionsfedereinheit Teil eines der Lenker ist. Die Aufhängung weist ferner eine Blattfeder auf. Die Torsionsfedereinheit umfasst eine einstellbare Torsionsfeder, einen Aktuator, der so angeordnet ist, dass er auf die Torsionsfeder wirkt, und einen Drehungsdämpfer, der mit der Torsionsfeder durch ein Anbringungsteilstück gegenseitig verbunden ist. Der Drehungsdämpfer und die Torsionsfeder sind mit dem Fahrgestell verbunden, und das Anbringungsteilstück ist mit dem Lenker verbunden. Der Aktuator ist so angeordnet, dass er die Torsionsfeder vorspannt und die Blattfeder in eine vorbestimmte Position vorbelastet sowie Schwingungen in der Aufhängung relativ zur vorbestimmten Position dämpft.

Ein gattungsgemäßer, sämtliche Merkmale des Oberbegriffs des Patentanspruches 1 aufweisender Rotationsdämpfer ist aus der DE 10 2011 102 743 A1 bekannt.

Der Erfindung liegt die Aufgabe zugrunde, einen Rotationsdämpfer bereitzustellen, bei dem die elastische Lagerung des Rotationsdämpfers an der Karosserie (eine der beiden Massen) in Bezug auf Steifigkeit und Auslegung einfach einzustellen und abzustimmen ist.

Dazu weist der erfindungsgemäße Rotationsdämpfer die Merkmale von Anspruch 1 auf. Durch diese Ausgestaltung des Befestigungsteils und des Lagerteils wird bei dem erfindungsgemäßen Rotationsdämpfer erreicht, dass anstelle von zwei Anschraubungspunkten nur ein zentraler Anschraubungspunkt durch den Befestigungsteil verwirklicht wird, wodurch der problematische Einfluss der minimalen Abstützbreite auf die Auslegbarkeit der elastischen Dämpfung vermieden wird. Kennzeichnend für den erfindungsgemäßen Rotationsdämpfer ist, dass der Befestigungsteil eine außenseitige um die Achse verlaufende Lagerfläche aufweist, und dass der Lagerteil eine innenseitige um die Achse verlaufende Lagerfläche aufweist, wobei das Elastomerlager zwischen der innenseitigen Lagerfläche an dem Lagerteil und der außenseitigen Lagerfläche an dem Befestigungsteil liegt. Durch diese Anordnung der Lagerflächen ergibt sich in vorteilhafter Weise eine über den Umfang gleichmäßige Einleitung der Kräfte in das Elastomerlager.

Nach einer weiteren vorteilhaften Ausführungsform ist der erfindungsgemäße Rotationsdämpfer dadurch gekennzeichnet, dass der Befestigungsteil eine Grundplatte und einen von der Grundplatte in Richtung der Achse also axial vorstehenden becherförmigen Grundplattenansatz mit einem radialen Bodenabschnitt und einem axialen Seitenwandabschnitt aufweist, der die außenseitige Lagerfläche aufweist. Dabei ist insbesondere vorteilhaft, wenn der Lagerteil einen axial verlaufenden Lageransatz mit einem radialen Bodenabschnitt und einem axialen Seitenwandabschnitt aufweist, der die innenseitige Lagerfläche bildet, einen entlang der Grundplatte verlaufenden Lagerabschnitt und eine an den Lagerabschnitt anschließende, axial verlaufende Lagerwand aufweist, an der der Anlenkhebel über ein Rollenlager drehbar gelagert ist. Durch diese Ausgestaltung des Befestigungsteils und des Lagerteils wird in vorteilhafter Weise eine baulich einfache und stabile Lösung breit gestellt, um das Elastomerlager sicher in dem Rotationsdämpfer unterzubringen. Außerdem wird die durch die axial verlaufende Lagerwand des Lagerteils eine sichere Lagerung des Anlenkhebels mit den damit verbundenen Teilen an dem Lagerteil erreicht.

Nach einer weiteren vorteilhaften Ausführungsform ist der erfindungsgemäße Rotationsdämpfer dadurch gekennzeichnet, dass die innenseitige Lagerfläche an dem Lagerteil und die außenseitige Lagerfläche an dem Befestigungsteil (10) sowie das Elastomerlager im Querschnitt senkrecht zu der Achse oval ausgebildet sind. Durch die ovale Ausführung des Elastomerlagers wird eine Drehmomentabstützung erreicht, wobei zwar eine gewisse Bewegung zwischen dem Befestigungsteil und dem Lagerteil möglich ist, andererseits einer zu großen Verschwenkung der beiden Teile gegeneinander eine entsprechende Kraft entgegengerichtet wird, die durch das außenseitigen Lagerfläche an dem Befestigungsteil gegenüber der innenseitigen Lagerfläche an dem Lagerteil erreicht wird.

Nach einer weiteren vorteilhaften Ausführungsform ist der erfindungsgemäße Rotationsdämpfer dadurch gekennzeichnet, dass der elektro-magnetische Dämpfermotor einen Rotor und einen Stator sowie Mittel zur Erzeugung eines Magnetfelds an dem Rotor und dem Stator umfasst, wobei der Rotor in dem Dämpfergehäuse koaxial damit drehbar gelagert ist und der Stator an dem Dämpfergehäuse befestigt ist. Ein solcher elektromechanischer Dämpfermotor eignet sich besonders zur Integration mit dem Rotationsdämpfer gemäß der Erfindung, da er auf der Lagerachse an dem Lagerteil angeordnet werden kann, sodass eine Schwingungsbelastung durch den Rotationsdämpfer gering gehalten werden kann.

Nach einer weiteren vorteilhaften Ausführungsform ist der erfindungsgemäße Rotationsdämpfer dadurch gekennzeichnet, dass der Lagerteil eine mit dem Bodenabschnitt des Lagerteils verbundene Lagerachse zur Lagerung des Dämpfermotors aufweist. Damit erfüllt der Lagerteil nicht nur die Funktion als Bestandteil des Rotationsdämpfers, der für die elastische Lagerung durch das Elastomerlager verantwortlich ist, sondern auch eine vorteilhafte Lagerung des Dämpfermotors ohne zusätzlichen Bauaufwand, in dem die Lagerachse mit dem Lagerteil einstückig ausgebildet ist.

Nach einer weiteren vorteilhaften Ausführungsform ist der erfindungsgemäße Rotationsdämpfer dadurch gekennzeichnet, dass das Getriebe ein Spannungswellengetriebe ist, das eine eine Innenverzahnung aufweisende starre Einheit, und eine eine Außenverzahnung aufweisende flexible Einheit und einen in der flexiblen Einheit drehbar gelagerten, ovalen Wellengenerator aufweist, durch dessen Drehung die flexible Einheit verformbar ist, wobei die beiden Einheiten des Getriebes formschlüssig über die Verzahnungen miteinander gekoppelt sind. Das Spannungswellengetriebe eignet sich vorteilhaft zur Integration mit dem erfindungsgemäßen Rotationsdämpfer, weil dies platzsparend zwischen dem Dämpfermotor und dem auf dem Befestigungsteil gelagerten Teilen des Rotationsdämpfers angeordnet werden kann.

Nach einer weiteren vorteilhaften Ausführungsform ist der erfindungsgemäße Rotationsdämpfer dadurch gekennzeichnet, dass die flexible Einheit mit dem Lagerteil und die starre Einheit mit dem Anlenkhebel und mit dem Dämpfergehäuse verbunden sind, wodurch die Integration des Spannungswellengetriebes in den erfindungsgemäßen Rotationsdämpfer vereinfacht wird, in dem bei dem erfindungsgemäßen Rotationsdämpfer die Einleitung der Drehbewegung des Anlenkhebels gegenüber dem Befestigungsteil auf das Spannungswellengetriebe zuverlässig eingeleitet werden kann.

Nach einer weiteren vorteilhaften Ausführungsform ist der erfindungsgemäße Rotationdämpfer dadurch gekennzeichnet, dass die flexible Einheit als Topf aus flexiblem Material ausgebildet ist, dessen freier Rand die Außenverzahnung aufweist und dessen Boden mit dem Lagerteil bzw. dem radialen Wandabschnitt des Lagerteils verbunden ist. Dadurch ergibt sich eine stabile und zuverlässige Integration des flexiblen Topfs in dem erfindungsgemäßen Rotationsdämpfers.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
Fig. 1 eine Schnittdarstellung des erfindungsgemäßen Rotationsdämpfers entlang einer Ebene in Längsrichtung des Rotationsdämpfers;
Fig. 2 eine Explosionsdarstellung der Anordnung eines Elastomerlagers; und
Fig. 3 eine Schnittdarstellung des Elastommerlagers und von zugeordneten Teilen des erfindungsgemäßen Rotationsdämpfers.

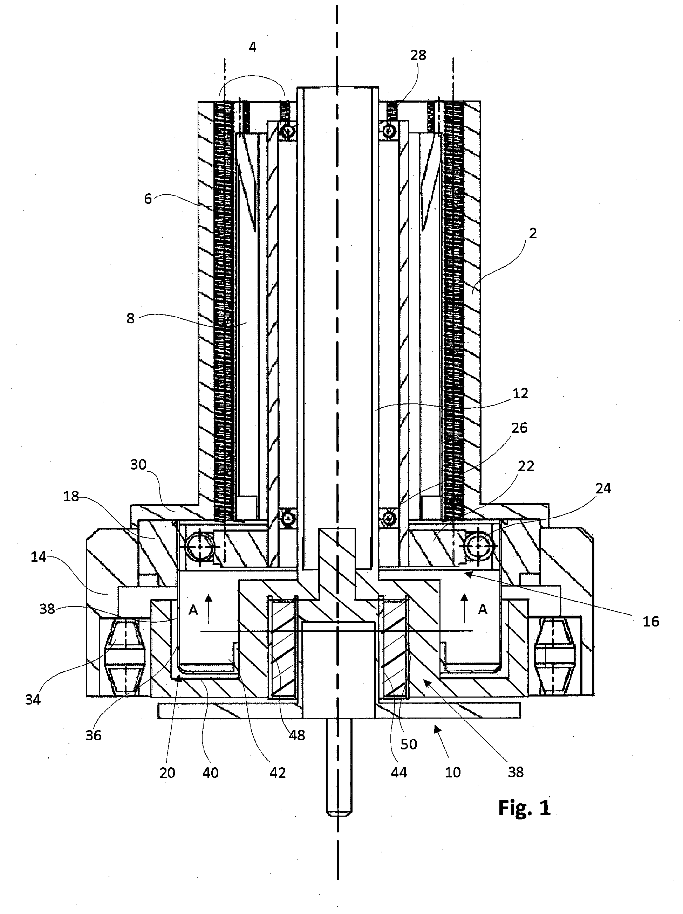

Ein Rotationsdämpfer weist gemäß Fig. 1 ein Dämpfergehäuse 2 auf, das einen elektromagnetischen Dämpfermotor 4 umgibt, der einen Stator 6 und einen in dem Stator 6 angeordneten Rotor 8 sowie Mittel zur Erzeugung eines Magnetfeldes an dem Rotor 8 und dem Stator 6 umfasst.

Der Rotor 8 ist auf einer mit dem Dämpfergehäuse 2 koaxialen Lagerachse 12 drehbar gelagert, während der Stator 6 an dem Dämpfergehäuse 2 befestigt ist. Der Rotor 8 kann eine Magnetanordnung umfassen, während der Stator 6 eine bestrombare Spulenanordnung umfasse kann, wie dies bei derartigen Dämpfermotoren 4 üblich ist.

Der Rotationsdämpfer ist über ein Befestigungsteil 10 an einer Karosserie zu befestigen. Ein Anlenkhebel 14 des Rotationsdämpfers ist mit der Radaufhängung (nicht gezeigt) verbunden.

Ein Spannungswellengetriebe 16 ist zum Übertragen und/oder Wandeln einer relativen Drehbewegung zwischen den Massen auf den Dämpfermotor 4 zur Schwingungsdämpfung vorgesehen.

Das Spannungswellengetriebe 16 umfasst eine eine Innenverzahnung aufweisende, starre Einheit 18 und eine eine Außenverzahnung aufweisende, flexible Einheit 20 und einen in der flexiblen Einheit 20 drehbar gelagerten, ovalen Wellengenerator 22, durch dessen Drehung die flexible Einheit 20 verformbar ist, wobei die beiden Einheiten 18, 20 formschlüssig über die Verzahnungen miteinander gekoppelt sind. Zwischen der flexiblen Einheit 20 und dem Wellengenerator 22 ist ein flexibles Wälzlager 24 angeordnet. Der Rotor 8 des Spannungswellengetriebes 16 ist über Rollenlager 26, 28 drehbar an der Lagerachse 12 gelagert.

Die starre Einheit 18 ist einerseits mit dem Anlenkhebel 14 und andererseits mit einer radialen Wand 30 des Dämpfergehäuses 2 verbunden, während der Wellengenerator 22 mit dem Rotor 8 des Dämpfermotors 4 verbunden ist. Die flexible Einheit 20 ist mit einem Lagerteil 38 verbunden, der über ein Rollenlager 34 an dem Anlenkhebel 14 gelagert ist. Zur Verbindung der flexiblen Einheit 20 mit dem Lagerteil 38 weist die flexible Einheit 20 einen axialen Wandabschnitt 36, einen radialen Wandabschnitt 40 und einen an dem Lagerteil 38 befestigten weiteren axialen Wandabschnitt 42 auf.

Die flexible Einheit bildet somit einen flexiblen Topf als Bestandteil des Spannungswellengetriebes 16.

Bei einer Ein-/Ausfederbewegung des Rades wird der Anlenkhebel 14 gegenüber dem Befestigungsteil 10 um einen Winkel geschwenkt. Infolge dieser Schwenkbewegung wird von dem Dämpfermotor 4 eine rückstellende Kraft erzeugt. Infolge der Drehgeschwindigkeit erzeugt der Rotationsdämpfer dadurch eine Dämpfungskraft.

In Fig. 1 ist schließlich die Anordnung des Lagerteils 48 und des Befestigungsteils 10 in dem Rotationsdämpfer, die Lagerung des Anlenkhebels 14 an dem Lagerteil 38 über das Rollenlager 34 sowie ein Elastomerlager 44 gezeigt. Der Befestigungsteil 10 kann an der Karosserie über Bolzen 32 befestigt werden, von denen in den Figuren nur einer gezeigt ist. Details dieser Teile des Rotationsdämpfers werden im Folgenden beschrieben.

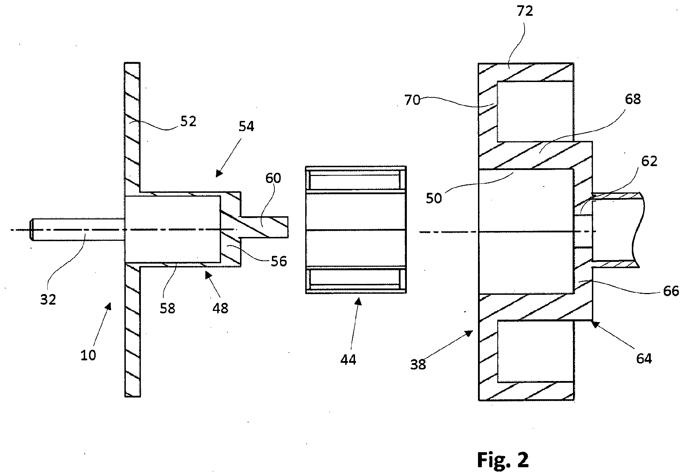

Fig. 2 zeigt eine Explosionsdarstellung der Anordnung des Elastomerlagers 44 zwischen dem Befestigungsteil 10 und einem Lagerteil 38. Gemäß Fig. 2 weist der Befestigungsteil 10 eine außenseitige Lagerfläche 48 auf, und der Lagerteil 38 weist eine innenseitige Lagerfläche 50 auf, wobei das Elastomerlager 44 zwischen der innenseitigen Lagerfläche 50 des Lagerteils 38 und der außenseitigen Lagerfläche 48 des Befestigungsteils 10 liegt. Im zusammengebauten Zustand liegt somit das Elastomerlager 44 zwischen den Lagerflächen 48 bzw. 50, wie auch in Fig. 1 dargestellt ist.

Der Befestigungsteil 10 weist eine Grundplatte 52 und eine von der Grundplatte 52 axial vorstehenden, becherförmigen Befestigungsplattenansatz 54 mit einem radialen Bodenabschnitt 56 und einem axialen Seitenwandabschnitt 58 auf, der seinerseits die außenseitige Lagerfläche 48 des Befestigungsteils 10 bildet. Der Lagerteil 38 umfasst einen axial verlaufenden Lageransatz 64 mit einem radialen Bodenabschnitt 66 und einem Seitenwandabschnitt 68 auf, der die innenseitige Lagerfläche 50 bildet. Der Lagerteil 38 hat ferner einen entlang der Grundplatte 52 des Befestigungsteils 10 verlaufenden Lagerabschnitt 70 und eine an den Lagerabschnitt 70 anschließende axial verlaufende Lagerwand 72, an der der Anlenkhebel 14 über das Rollenlager 74 gelagert ist. Schließlich umfasst der Lagerteil 38 auch die mit seinem Bodenabschnitt 66 verbundene Lagerachse 12 zur Lagerung des Dämpfermotors 4.

An dem Befestigungsteil 10 ist ein Zapfen 60 angesetzt, der in eine Bohrung 62 passen hineinragt, die in dem Lagerteil 38 zentriert zu der Achse X vorgesehen ist, wodurch eine Ausrichtung des Befestigungsteils 10 gegenüber der Lagerteil 38 erreicht wird.

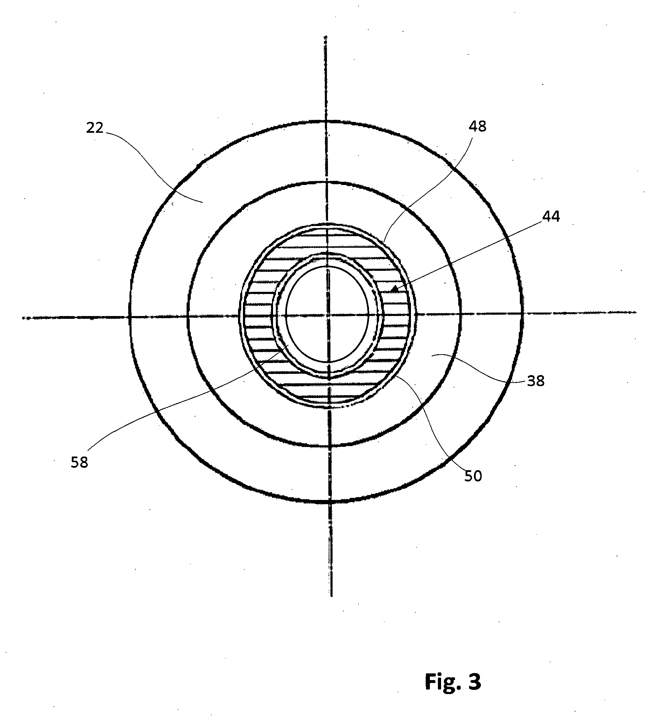

Fig. 3 ist eine Schnittdarstellung des Elastomerlagers 44 und von zugeordneten Teilen des erfindungsgemäßen Rotationsdämpfers nach dem Schnitt entsprechend A-A in Fig. 1. Gemäß Fig. 3 ist die innenseitige Lagerfläche 50 des Lagerteils 38 und die außenseitige Lagerfläche 48 der Wand 58 des Befestigungsteilansatzes 54 sowie das Elastomerlager 44 im Querschnitt senkrecht zu der Achse X oval ausgebildet. Durch diese Anordnung der Lagerflächen 48, 50 für das Elastomerlager 44 wird sichergestellt, dass die Kraft, die einer Verschwenkung des Lagerteils 38 gegenüber dem Befestigungsteil 10 entgegengesetzt wird, umso größer wird, je weiter die ovalen Flächen von einer nicht-ausgelenkten Nulllage zwischen dem Befestigungsteil 10 und dem Lagerteil 38, bei der die jeweiligen langen und kurzen Achsen der Ovale übereinanderliegen, abweichen. Damit wird eine wirksame Drehmomentabstützung erreicht.
Die Erfindung ist nicht auf die gezeigten Ausführungsbeispiele eingeschränkt sondern umfasst Rotationsdämpfer, die unter den Schutzumfang der Ansprüche fallen. Insbesondere können andere Arten von Getrieben als Spannungswellengetriebe eingesetzt werden, ohne den Umfang der Ansprüche zu verlassen.

### Bezugszeichenliste

- 2: Dämpfergehäuse
- 4: Dämpfermotor
- 6: Stator
- 8: Rotor
- 10: Befestigungsteil
- 12: Lagerachse
- 14: Anlenkhebel
- 16: Spannungswellengetriebe
- 18: starre Einheit
- 20: flexible Einheit
- 22: Wellengenerator
- 24: Wälzlager
- 26: Rollenlager
- 28: Rollenlager
- 30: radiale Wand
- 32: Bolzen
- 34: Rollenlager
- 36: Wandabschnitt
- 38: Lagerteil
- 40: radialer Wandabschnitt
- 42: axialer Wandabschnitt
- 44: Elastomerlager
- 48: Lagerfläche
- 50: Lagerfläche
- 52: Grundplatte
- 54: Befestigungsteilansatz
- 56: radialer Bodenabschnitt
- 58: Seitenwandabschnitt
- 60: Zapfen
- 62: Bohrung
- 64: Lageransatz
- 66: Bodenabschnitt
- 68: Seitenwandabschnitt
- 70: Lagerabschnitt
- 72: Lagerwand

## Patentansprüche

1. Rotationsdämpfer der über ein Befestigungsteil (10) an einer ersten Masse zu befestigen ist, ein Dämpfergehäuse (2), das einen entlang einer zentralen Achse (X) des Rotationsdämpfers angeordneten elektro-magnetischen Dämpfermotor (4) umgibt, einen Anlenkhebel (14), der mit einer zweiten Masse verbundenen ist, sowie ein Getriebe (16) zum Übertragen und/oder Wandeln einer relativen Drehbewegung zwischen den Massen auf den Dämpfermotor (4) zur Schwingungsdämpfung aufweist, wobei der Befestigungsteil (10) über ein Elastomerlager (44) mit einem Lagerteil (38) verbunden ist, auf dem der Dämpfermotor (4) des Rotationsdämpfers angeordnet ist, und wobei das Dämpfergehäuse (2) mit dem Anlenkhebel (14) verbunden ist, der gegenüber dem Lagerteil (38) drehbar gelagert ist, **dadurch gekennzeichnet, dass** der Befestigungsteil (10) eine außenseitige Lagerfläche (48) aufweist, und dass der Lagerteil (38) eine innenseitige Lagerfläche (50) aufweist, wobei das Elastomerlager (44) zwischen der innenseitigen Lagerfläche (50) an dem Lagerteil (38) und der außenseitigen Lagerfläche (48) an dem Befestigungsteil (10) liegt.

2. Rotationsdämpfer nach Anspruch 1, **dadurch gekennzeichnet, dass** der Befestigungsteil (10)
eine Grundplatte (52) und einen von der Grundplatte (52) in Richtung der Achse (X) also axial vorstehenden becherförmigen Grundplattenansatz (54) mit einem radialen Bodenabschnitt (56) und einem axialen Seitenwandabschnitt (58) aufweist, der die außenseitige Lagerfläche (48) aufweist.

3. Rotationsdämpfer nach Anspruch 1 oder 2, **dadurch gekennzeichnet, dass** der Lagerteil (38) einen axial verlaufenden Lageransatz (64) mit einem radialen Bodenabschnitt (66) und einem axialen Seitenwandabschnitt (68) aufweist, der die innenseitige Lagerfläche (50) bildet, einen entlang der Grundplatte (52) verlaufenden Lagerabschnitt (70) und eine an den Lagerabschnitt (70) anschließende, axial verlaufende Lagerwand (72) aufweist, an der der Anlenkhebel (14) über das Rollenlager (34) drehbar gelagert ist.

4. Rotationsdämpfer nach Anspruch 3, **dadurch gekennzeichnet, dass** der Lagerteil (38) die mit dem Bodenabschnitt (66) des Lagerteils (38) verbundene Lagerachse (12) zur Lagerung des Dämpfermotors (4) aufweist.

5. Rotationsdämpfer nach einem der Ansprüche 1 bis 4, **dadurch gekennzeichnet, dass** der elektro-magnetische Dämpfermotor (4) einen Rotor (8) und einen Stator (6) sowie Mittel zur Erzeugung eines Magnetfelds an dem Rotor (8) und dem Stator (6) umfasst, wobei der Rotor (8) auf der Lagerachse (12) in dem Dämpfergehäuse (2) koaxial damit drehbar gelagert ist und der Stator (6) an dem Dämpfergehäuse (2) befestigt ist.

6. Rotationsdämpfer nach Anspruch 1, **dadurch gekennzeichnet, dass** die innenseitige Lagerfläche (50) an dem Lagerteil (38) und die außenseitige Lagerfläche (48) an dem Befestigungsteil (10) sowie das Elastomerlager (44) im Querschnitt senkrecht zu der Achse (X) oval ausgebildet sind.

7. Rotationsdämpfer nach einem der Ansprüche 1 bis 6, **dadurch gekennzeichnet, dass** das Getriebe (16) ein Spannungswellengetriebe ist, das eine eine Innenverzahnung aufweisende starre Einheit (18), und eine eine Außenverzahnung aufweisende flexible Einheit (20) und einen in der flexiblen Einheit (20) drehbar gelagerten, ovalen Wellengenerator (22) aufweist, durch dessen Drehung die flexible Einheit (20) verformbar ist, wobei die beiden Einheiten (18, 20) des Getriebes (14) formschlüssig über die Verzahnungen miteinander gekoppelt sind.

8. Rotationsdämpfer nach Anspruch 7, **dadurch gekennzeichnet, dass** die flexible Einheit (20) mit dem Lagerteil (38) und die starre Einheit (18) mit dem Anlenkhebel (14) und mit dem Dämpfergehäuse (2) verbunden sind.

## Claims

1. Rotary damper that is mounted to a first mass via a fastening part (10), a damper housing (2) which surrounds an electro-magnetic damper motor (4) disposed along a central axis (X) of the rotary damper, an articulation lever (14) connected to a second mass, and having a transmission (16) for transmitting and/or converting a relative rotational movement between the masses to the damper motor (4) for vibration damping, wherein the fastening part (10) is connected via an elastomeric bearing (44) with a bearing part (38) on which the damper motor (4) of the rotary damper is arranged, and wherein the damper housing (2) is connected to the articulation lever (14), which is rotatably mounted opposite the bearing part (38), **characterized in that** the fastening part (10) has an outside bearing surface (48), and that the bearing part (38) has an inside bearing surface (50), wherein the elastomer bearing (44) lies between the inside bearing surface (50) on the bearing part (38) and the outer bearing surface (48) on the fastening part (10).

2. Rotary damper according to claim 1, **characterized in that** the fastening part (10) has a base plate (52) and a cup-shaped base plate extension (54) which projects axially from the base plate (52) in the direction of the axis (X) with a radial bottom section (56) and an axial side wall portion (58) having the outside bearing surface (48).

3. Rotary damper according to claim 1 or 2, **characterized in that** the bearing part (38) has an axially extending bearing shoulder (64) with a radial bottom section (66) and an axial side wall portion (68) that forms the inside bearing surface (50), a bearing section (70) extending along the base plate (52), and an axially extending bearing wall (72) connected to the bearing section (70), on which the articulation lever (14) is rotatably mounted via the roller bearing (34).

4. Rotary damper according to claim 3, **characterized in that** the bearing part (38) has the with the bottom section (66) of the bearing part (38) connected bearing shaft (12) for housing the damper motor (4).

5. Rotary damper according to one of claims 1 to 4, **characterized in that** the electromagnetic damper motor (4) comprises a rotor (8) and a stator (6) as well as means for generating a magnetic field on the rotor (8) and the stator (6), wherein the rotor (8) is rotatably mounted coaxially therewith on the bearing shaft (12) in the damper housing (2) and the stator (6) is fixed to the damper housing (2).

6. Rotary damper according to claim 1, **characterized in that** the inside bearing surface (50) on the bearing part (38) and the outside bearing surface (48) on the fastening part (10) as well as the elastomer bearing (44) are ovally formed in cross-section perpendicular to the axis (X).

7. Rotary damper according to one of claims 1 to 6, **characterized in that** the transmission (16) is a strain wave gearing, which has a rigid unit (18) with internal teeth, and a flexible unit (20) with external teeth, and a rotatably mounted, oval wave generator (22) in the flexible unit (20), by whose rotation the flexible unit (20) is deformable, wherein the two units (18, 20) of the transmission (14) are positively coupled to each other via the teeth.

8. Rotary damper according to claim 7, **characterized in that** the flexible unit (20) is connected with the bearing part (38) and the rigid unit (18) with the articulation lever (14) and with the damper housing (2).

## Revendications

1. Amortisseur de rotation qui doit être fixé via une partie de fixation (10) à une première masse et qui présente un boîtier d'amortisseur (2), qui entoure un moteur d'amortissement électromagnétique (4) agencé le long d'un axe central (X) de l'amortisseur de rotation, un levier articulé (14), qui est raccordé à une seconde masse, ainsi qu'un train d'engrenage (16) pour transférer et/ou convertir un mouvement de rotation relatif entre les masses sur le moteur d'amortissement (4) pour amortir les vibrations, dans lequel la partie de fixation (10) est raccordée via un palier d'élastomère (44) à une partie de palier (38) sur laquelle le moteur d'amortissement (4) de l'amortisseur de rotation est agencé et dans lequel le boîtier d'amortisseur (2) est raccordé au levier articulé (14), qui est monté à rotation vis-à-vis de la partie de palier (38), **caractérisé en ce que** la partie de fixation (10) présente une surface portante côté externe (48) et la partie de palier (38) une surface portante côté interne (50), dans lequel le palier d'élastomère (44) se trouve entre la surface portante côté interne (50) sur la partie de palier (38) et la surface portante côté externe (48) sur la partie de fixation (10).

2. Amortisseur de rotation selon la revendication 1, **caractérisé en ce que** la partie de fixation (10) présente une plaque de base (52) et un épaulement de plaque de base en forme d'auge (54) saillant donc axialement de la plaque de base (52) dans la direction de l'axe (X) avec une section de fond radiale (56) et une section de paroi latérale axiale (58) que présente la surface portante côté externe (48).

3. Amortisseur de rotation selon la revendication 1 ou 2, **caractérisé en ce que** la partie de palier (38) présente un épaulement de palier s'étendant axialement (64) avec une section de fond radiale (66) et une section de paroi latérale axiale (68), qui forme la surface portante côté interne (50), une section de palier (70) s'étendant le long de la plaque de base (52) et une paroi de palier (72) s'étendant axialement et se raccordant à la section de palier (70), sur laquelle paroi de palier le levier articulé (14) est monté à rotation via le roulement à rouleaux (34).

4. Amortisseur de rotation selon la revendication 3, **caractérisé en ce que** la partie de palier (38) présente l'axe de palier (12) raccordé à la section de fond (66) de la partie de palier (38) pour monter le moteur d'amortisseur (4).

5. Amortisseur de rotation selon l'une quelconque des revendications 1 à 4, **caractérisé en ce que** le moteur d'amortisseur électromagnétique (4) comprend un rotor (8) et un stator (6) ainsi que des moyens de production d'un champ magnétique sur le rotor (8) et le stator (6), dans lequel le rotor (8) est donc monté à rotation coaxialement sur l'axe de palier (12) dans le boîtier d'amortisseur (2) et le stator (6) est fixé sur le boîtier d'amortisseur (2).

6. Amortisseur de rotation selon la revendication 1, **caractérisé en ce que** la surface portante côté interne (50) sur la partie de palier (38) et la surface portante côté externe (48) sur la partie de fixation (10) ainsi que le palier d'élastomère (44) ont une forme ovale en section transversale perpendiculairement à l'axe (X).

7. Amortisseur de rotation selon l'une quelconque des revendications 1 à 6, **caractérisé en ce que** le train d'engrenage (16) est un train d'engrenage à ondes de tension, qui présente une unité rigide (18) présentant une denture interne et une unité souple (20) présentant une denture externe et un générateur d'ondes ovale (22) monté à rotation dans l'unité souple (20), par la rotation duquel l'unité souple (20) peut être déformée, dans lequel les deux unités (18, 20) du train d'engrenage (14) qui sont mécaniquement couplées l'une à l'autre via les dentures.

8. Amortisseur de rotation selon la revendication 7, **caractérisé en ce que** l'unité souple (20) est raccordée à la partie de palier (38) et l'unité rigide (18) est reliée au levier articulé (14) et au boîtier d'amortisseur (2).
